(19) Europäisches Patentamt
European Patent Office
Office européen des brevets

(11) **EP 4 118 048 B1**

(12) **EUROPÄISCHE PATENTSCHRIFT**

(45) Veröffentlichungstag und Bekanntmachung des Hinweises auf die Patenterteilung:
**27.12.2023  Patentblatt 2023/52**

(21) Anmeldenummer: **21713584.7**

(22) Anmeldetag: **04.03.2021**

(51) Internationale Patentklassifikation (IPC):
***C03C 23/00*** *(2006.01)*

(52) Gemeinsame Patentklassifikation (CPC):
**C03C 23/0025;** C03C 2218/32

(86) Internationale Anmeldenummer:
**PCT/EP2021/055516**

(87) Internationale Veröffentlichungsnummer:
**WO 2021/180569 (16.09.2021 Gazette 2021/37)**

(54) **VERFAHREN ZUR UMFORMENDEN BEARBEITUNG EINES TRÄGERSUBSTRATES FÜR EIN OPTISCHES FUNKTIONSBAUTEIL**

METHOD FOR SHAPING A SUPPORT SUBSTRATE FOR AN OPTICAL FUNCTIONAL COMPONENT

PROCÉDÉ DE MISE EN FORME D'UN SUBSTRAT SUPPORT POUR UN ÉLÉMENT OPTIQUE FONCTIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2020  DE 102020106768**

(43) Veröffentlichungstag der Anmeldung:
**18.01.2023  Patentblatt 2023/03**

(73) Patentinhaber: **Institut für Nanophotonik Göttingen e.V.**
**37077 Göttingen (DE)**

(72) Erfinder:
• **IHLEMANN, Jürgen**
**37077 Göttingen (DE)**
• **BECKMANN, Clemens Martin**
**37077 Göttingen (DE)**

(74) Vertreter: **Schneider, Peter Christian**
**Fiedler, Ostermann & Schneider**
**Patentanwälte**
**Obere Karspüle 41**
**37073 Göttingen (DE)**

(56) Entgegenhaltungen:
WO-A1-2014/085663     WO-A2-2005/005069
US-A1- 2015 274 586     US-A1- 2020 385 307

**Beschreibung**

Gebiet der Erfindung

Die Erfindung betrifft ein Verfahren zur umformenden Bearbeitung eines als Trägersubstrat für ein optisches Funktionsbauteil geeigneten, plattenartigen Substrates, im Rahmen dessen eine Bearbeitungsoberfläche des Substrates durch lokale Lasermodifikation mit Zugspannungsbereichen versehen wird, um so eine insbesondere konkave Verformung des Substrates hervorzurufen, wobei die Lasermodifikation durch Beaufschlagung der Bearbeitungsoberfläche mit gepulster Laserstrahlung einer thermischen Eindringtiefe zwischen 10 nm und 10 μm erfolgt.

Stand der Technik

Ein derartiges Verfahren ist bekannt aus Zhang, X. R. u. Xu, Xianfan: "Microscale bending of brittle materials using pulsed and CW lasers", Proc. SPIE 4637, Photon Processing in Microelectronics and Photonics, (18. Juni 2002); doi:10.1117/12.470635.

Diese Druckschrift offenbart das Einbringen einer Biegung in ein dünnes Plättchen aus Quarz, Keramik oder Silizium um eine gerade Biegelinie, wobei die Biegelinie durch ein ablatierendes und oberflächlich aufschmelzendes, linienförmiges Abfahren einer hier als Bearbeitungsoberfläche bezeichneten Oberfläche des Substrates mit einem gepulsten Laser definiert wird. Die Druckschrift nimmt an, dass die aus einer solchen Bearbeitung resultierende Verformung des Substrates durch den sogenannten Temperaturgradientenmechanismus hervorgerufen wird. Die Materialerstarrung, die nach dem lokalen Aufschmelzen der Bearbeitungsoberfläche, d.h. beim Weiterwandern des Lasers, auftritt, führt, insbesondere wenn Materialverluste durch Ablation zu verzeichnen sind, zu einer lokalen Volumenverringerung der Substratoberfläche. Dies führt zu lokalen Zugspannungen, denen das Substrat unter entsprechender, konkaver Verformung nachgibt. Die Wahl der Strahlungsparameter, insbesondere der Wellenlänge, Pulslänge und Pulsfrequenz, des Lasers haben auf das jeweilige Substratmaterial abgestimmt zu sein. Diese Abstimmung kann in für den Fachmann nacharbeitbarer Weise durch Vorgabe der sogenannten thermischen Eindringtiefe vorgegeben werden. Die thermische Eindringtiefe ist eine Größe, die sich wie folgt definiert: Man betrachte das von der Tiefe z unter der Substratoberfläche (z=0) und der Zeit t abhängige Temperaturprofil ΔT(z,t) = T(z,t) - To, wo To = T(z=0, t=0) die homogene Temperatur des Substrates unmittelbar vor der Laserbeaufschlagung und T(z,t) die Temperatur des Substrates am Ort der Laserbeaufschlagung in der Tiefe z zur Zeit t nach Beginn der Laserbeaufschlagung ist. Sodann bestimme man für jede Tiefe z' den maximalen Wert von ΔT(z=z',t), um das zeitunabhängige Temperaturprofil ΔT'(z) zu erhalten. Die thermische Eindringtiefe Z ist diejenige Tiefe z=Z, an der ΔT'(z) auf das 1/e-fache seines Maximalwertes abgefallen ist, d.h. ΔT'(Z) = 1/e*ΔT'max.

Die genannte Druckschrift untersucht den Temperaturgradientenmechanismus unter Verwendung verschiedener Lasertypen, Laserleistungen, Beaufschlagungsmuster und Substratmaterialien. Irgendeine praktische Anwendung wird in der genannten Druckschrift nicht erwähnt, geschweige denn ein nacharbeitbares Verfahren für solch eine praktische Anwendung angegeben.

Im Bereich der Herstellung optischer Funktionsbauteile, insbesondere im speziell für die Raumfahrt wichtigen Bereich des Leichtbaus, ist die Beschichtung von Trägersubstraten mit optischen Funktionsschichten, beispielsweise einer Spiegelschicht, auf ihrer hier als Funktionsoberfläche bezeichneten Substratfläche mit Problemen verbunden. Die Schichtspannung der Funktionsschicht führt zu einer Zugkraftbeaufschlagung des Trägersubstrates, welche sich insbesondere bei sehr dünnen Trägersubstraten, wie sie gerade im Leichtbau Einsatz finden, in einer Verformung, d. h. einer Änderung der Form bzw. einer Formänderung des Substrats, insbesondere einer in Bezug auf die Funktionsschicht konkaven Verkrümmung, d. h. einer Änderung der Krümmung bzw. Krümmungsänderung des Substrates niederschlagen kann (wobei die Krümmung ein Teilaspekt der Form, d. h. ein Zustandsparameter des Substrats ist). Solche Verformungen wirken sich auf die optische Leistungsfähigkeit der Funktionsbauteile aus und können insbesondere bei Präzisionsbauteilen nicht mehr tolerierbare Ausmaße annehmen. Der Zusammenhang zwischen der Schichtspannung und der resultierenden Substratkrümmung ist physikalisch gut verstanden und lässt sich mit der sogenannten Stoney-Gleichung darstellen:

$$ \sigma = \frac{E_s}{6\,(1-v_s)}\,\frac{t_s^2}{t_f}\,k, $$

wobei $E_s$ das Elastizitätsmodul, $v_s$ die Poissonzahl, $t_s$ die Substratdicke, $t_f$ die Dicke der Spannungsschicht und $k$ die Substratkrümmung ist mit

$$ k = \frac{d^2h/dx^2}{\left(1+\left(dh/dx\right)^2\right)^{3/2}}, $$

wobei $h(x)$ das Höhenprofil einer repräsentativ für das Substrat vermessenen Fläche ist.

Als Gegenmaßnahme für die oben erläuterte, ungewollte Verformung des Substrates ist es bekannt, das Substrat vor der Beschichtung durch mechanischen Präzisionsabtrag, beispielsweise Präzisionsfräsen oder Präzisionsschleifen, vorbeugend derart zu modifizieren, dass die durch die Beschichtung erzeugte Substratverformung die vorherige Formmodifikation gerade kompensiert. Hierzu kann das Substrat zuvor mit einer eigens zum Präzisionsabtrag vorgesehenen Schicht belegt werden, wie dies aus der DE 100 44 212 A1 bekannt ist. Aus der US 2018/0067403 A1 ist dies speziell unter Zuhilfenahme lithographischer Techniken bekannt. Und Heng E. Zuo et al.: "Demonstration of femtosecond laser micromachining for figure correction of thin silicon optics for x-ray telescopes", in: Proc. SPIE 11119, Optics for EUv, X-Ray, and Gamma-Ray Astronomy IX, 111191A (9 September 2019); https://doi.org/10.1117/12.2530947 offenbart den gleichen Ansatz unter Verwendung von Laserablationstechniken. All dies hat sich jedoch als äußerst schwierig und auf komplexere Formgebungen kaum anwendbar erwiesen. Dies liegt unter anderem daran, dass eine mechanisch materialabtragende Bearbeitung bei den als Trägersubstrate für optische Funktionsbauteile besonders geeigneten, spröden Materialien wie Glas, Quarz, Keramik, Silizium äußerst schwierig ist. Als Alternative ist es bekannt, auf die Rückseite eine die von der Funktionsschicht erzeugte Verkrümmung kompensierende Kompensationsschicht aufzutragen. Es ist allerdings schwierig, zu jeder speziellen und in der Regel teuren Funktionsschicht ein kostengünstige Kompensationsschicht mit exakt denselben Spannungseigenschaften zu finden. Um eine exakte Kompensation zu erreichen, ist es daher oft nötig, die Funktionsschicht beidseitig, nämlich einmal als eigentliche Funktionsschicht und einmal als Kompensationsschicht aufzutragen. Dieser Ansatz ist allerdings meist zu teuer und aufwendig.

Aus der US 2013/0161797 A1 ist es bekannt, die Rückseite des Substrates, d. h Funktionsschicht tragenden Vorderseite gegenüber liegt, durch Laserbestrahlung derart zu modifizieren, dass sich, wie aus der eingangs bereits erwähnten Druckschrift bekannt, eine Vorkrümmung des Substrates einstellt, die durch das Aufbringen der Funktionsschicht derart kompensiert wird, dass diese am Ende die gewünschte Flächenform erhält. Es ist allerdings überaus schwierig, die hierfür erforderliche Krümmung zu antizipieren.

Aus der WO 2005/005069 A2 ist ein spezielles Verfahren zur Berechnung der zur Erzielung einer gewünschten Substratkrümmung erforderlichen Laserbeaufschlagung bekannt. Hierzu wird die gewünschte Form virtuell modelliert und virtuell zwischen zwei planparallelen Platten gequetscht. Die beim Quetschvorgang im Substrat entstehenden Spannungen werden berechnet, mit umgekehrtem Vorzeichen als in das Substrat einzubringende Spannung identifiziert und auf Basis von Kalibrierdaten in die aufzubringende Laserbeaufschlagung umgerechnet.

Aus der US 2014/0083984 A1 und der CN 104360429 A sind allgemein gängige Dimensionierungsmaßnahmen bei der Modifikation der Oberfläche eines Substrats durch rasternde Beaufschlagung mit einem gepulsten Laser bekannt.

Aufgabenstellung

Es ist die Aufgabe der vorliegenden Erfindung, ein Verfahren zur gezielten Umformung von Trägersubstraten für optische Funktionsbauteile zur Verfügung zu stellen, welches insbesondere auf einen mechanischen Abtrag von Material auf der Funktionsoberfläche vor Aufbringung einer Funktionsschicht verzichten kann.

Darlegung der Erfindung

Diese Aufgabe wird in Verbindung mit den Merkmalen des Oberbegriffs von Anspruch 1 gelöst durch die Schritte:

- Ermitteln der Ist-Krümmung der der Bearbeitungsoberfläche gegenüberliegenden Funktionsoberfläche des Substrates,
- Berechnen der Krümmungsdifferenz zwischen der ermittelten Ist-Krümmung und einer vorgegebenen Soll-Krümmung der Funktionsoberfläche,
- virtuelles, flächendeckendes Unterteilen der Bearbeitungsoberfläche und der Funktionsoberfläche in eine Mehrzahl korrespondierender Oberflächenzellen und Zuordnen eines Krümmungsdifferenzwertes zu jeder Oberflächenzelle der Bearbeitungsoberfläche, wobei der Krümmungsdifferenzwert jeweils dem Wert der mittleren Krümmungsdifferenz in der korrespondierenden Oberflächenzelle der Funktionsfläche entspricht,
- für jede Oberflächenzelle der Bearbeitungsoberfläche:

    ▪ Bestimmen derjenigen Laserenergie als Beaufschlagungsenergie, deren Eintrag in die Oberflächenzelle zur Erzielung einer dem zugeordneten Krümmungsdifferenzwert entsprechenden Verformung geeignet ist, und
    ▪ Beaufschlagen der Oberflächenzelle mit dieser Beaufschlagungsenergie.

Bevorzugte Ausführungsformen sind Gegenstand der abhängigen Ansprüche.

Die Grundidee der Erfindung liegt darin, den im Grunde bekannten Temperaturgradientenmechanismus auf der "Rückseite" (Bearbeitungsoberfläche) eines Substrates zielgerichtet anzuwenden, um dadurch eine Verformung des Substrates hervorzurufen, die sich insbesondere auch auf dessen "Vorderseite" (Funktionsoberfläche) bemerkbar macht, sodass dadurch ungewollte Verformungen, die z. B. durch Beschichtung der Funktionsoberfläche mit einer Funktionsschicht auftreten, kompensiert werden. Insbesondere ist das erfindungsgemäße Verfahren dazu geeignet, ein auf seiner vorderseitigen Funktionsoberfläche bereits mit einer Funktionsschicht versehenes (und entsprechend bereits ungewollt verformtes) Substrat durch eine die Funktionsschicht nicht beeinträchtigende, rückseitige Bearbeitung, nämlich der Bearbeitungsoberfläche, zu korrigieren. Die Korrektur kann dabei einzelfallbezogen, d. h. speziell auf die vorliegende, ungewollte Verformung abgestimmt, durchgeführt werden.

Entsprechend gut kann die resultierende Endform des Substrates bzw. des optischen Bauteils der gewünschten Idealform angenähert werden.

Die rückseitige Bearbeitung des Substrates erfolgt rein optisch unter Nutzung des bekannten Temperaturgradientenmechanismus, wobei allerdings eine Schwierigkeit darin besteht, an den richtigen Stellen der Bearbeitungsoberfläche die richtigen Zugspannungen zu etablieren, um insgesamt zu der "richtigen" Formänderung des Substrates zu gelangen.

Dazu wird das Substrat zunächst virtuell in eine Vielzahl von flächigen Zellen, auf deren erfindungsgemäße Spezifikation weiter unten näher eingegangen werden soll und die hier verkürzt auch als Flächenzellen bezeichnet werden, unterteilt. Für jede Flächenzelle werden Ist- und Soll-Form, insbesondere Ist- und Soll-Krümmung, miteinander verglichen und es wird diejenige Krümmungsänderung berechnet, der besagte Flächenzelle unterworfen werden muss, um die Substratform von der lokalen Ist- in die lokale Soll-Form zu überführen. Die hierfür benötigte, sog. integrierte Schichtspannung, d.h. das Produkt aus der Schichtspannung $\sigma$ und der Schichtdicke $t_f$, die dafür auf der Bearbeitungsoberfläche des Substrates in besagter Flächenzelle erzeugt werden muss, lässt sich im einfachsten Fall über die o. g. Stoney-Gleichung berechnen. Am Ende dieses Verfahrensabschnittes ist also für jede Flächenzelle des Substrates bekannt, welche Schichtspannung in ihr auf der Bearbeitungsoberfläche erzeugt werden muss, sodass sich insgesamt die gewünschte Verformung des Substrates von dessen Ist- in dessen Soll-Form ergibt.

Das resultierende Mosaik von lokalen integrierten Schichtspannungswerten wird sodann umgerechnet in ein Mosaik von lokalen Laserenergien, die in die jeweiligen Flächenzellen einzubringen sind, um die gewünschte lokale Krümmungsänderung zu erzeugen, d. h. in ein Mosaik von lokalen Beaufschlagungsenergien. Der Zusammenhang zwischen der jeweiligen lokalen Beaufschlagungsenergie und der jeweils resultierenden, lokalen Krümmungsänderung bzw. integrierten Schichtspannung kann zuvor mittels geeigneter Kalibriermessungen an vergleichbaren Substraten gewonnen werden.

Im Anschluss an diese Berechnungen wird sodann jede Flächenzelle mit der für sie berechneten Beaufschlagungsenergie in Form einer gepulsten Laserstrahlung eingebracht.

Für die Bestimmung der Substratkrümmung ist erfindungsgemäß vorgesehen, die Krümmung der "Vorderseite", d. h. der Funktionsoberfläche, als repräsentativ für die Substratkrümmung anzunehmen und alle krümmungsbezogenen Verfahrensschritte auf die Funktionsoberfläche zu referenzieren. Die Laserbeaufschlagung hat hingegen auf die "Rückseite", d. h. auf die Bearbeitungsoberfläche, des Substrates zu erfolgen. Dieser Ansatz geht von der im Rahmen der für praktische Anwendungen erforderlichen Genauigkeit experimentell gut bestätigten Annahme aus, dass die Krümmungen und Krümmungsänderungen der Vorder- und Rückseite einer Platte gleich groß sind. Unter dieser der Erfindung zugrunde liegenden Prämisse ist also erfindungsgemäß vorgesehen, dass

- der Schritt des Ermittelns der Ist-Krümmung des Substrates durch Ermitteln der Ist-Krümmung der der Bearbeitungsoberfläche gegenüberliegenden Funktionsoberfläche des Substrates erfolgt,
- der Schritt des Berechnens der Krümmungsdifferenz durch Berechnen der Krümmungsdifferenz zwischen der ermittelten Ist-Krümmung der Funktionsoberfläche und einer vorgegebenen Soll-Krümmung der Funktionsoberfläche erfolgt,
- der Schritt des virtuellen Unterteilens des Substrates in Flächenzellen als ein Schritt des virtuelles, flächendeckendes Unterteilens der Bearbeitungsoberfläche und der Funktionsoberfläche in eine Mehrzahl korrespondierender Oberflächenzellen erfolgt und der Schritt des Zuordnens des Krümmungsdifferenzwertes durch Zuordnen eines Krümmungsdifferenzwertes zu jeder Oberflächenzelle der Bearbeitungsoberfläche erfolgt, wobei der Krümmungsdifferenzwert jeweils dem Wert der mittleren Krümmungsdifferenz in der korrespondierenden Oberflächenzelle der Funktionsfläche entspricht, und
- die Schritte des Bestimmens der Beaufschlagungsenergie sowie des Beaufschlagens mit der Beaufschlagungsenergie für jede Oberflächenzelle der Bearbeitungsoberfläche erfolgen.

Die konkrete Messung der Oberflächenform, insbesondere der Form der Funktionsoberfläche kann auf beliebige, dem Fachmann grundsätzlich bekannte Weise erfolgen, beispielsweise durch taktile oder optische, einschließlich interferometrische Messverfahren.

In der Praxis haben sich zur Einbringung unterschiedlicher Beaufschlagungsenergien in unterschiedliche Oberflächenzellen zwei Ansätze bewährt. Bei einem ersten Ansatz ist vorgesehen, dass Oberflächenzellen der Bearbeitungsoberfläche, für die unterschiedliche Beaufschlagungsenergien bestimmt wurden, mit gleichem Aspektenverhältnis mit der Laserstrahlung entsprechend unterschiedlicher Fluenzen beaufschlagt werden. Unter dem Aspektenverhältnis soll hier der Quotient aus innerhalb einer Oberflächenzelle tatsächlich mit Laserstrahlung beaufschlagter Fläche zur (bei gegebenem Aufbau) potentiell mit Laserstrahlung beaufschlagbarer Fläche verstanden werden. Bei besagtem ersten Ansatz wird also beim sequenziellen Anfahren der einzelnen Oberflächenzellen die Intensität des beaufschlagenden Laserstrahls variiert. Die Strahlweite der Laserstrahlung kann sowohl größer als auch kleiner als die Größe der Oberflächenzellen sein. Der Fachmann kann die konkrete Wahl der Laserstrahlung in Ansehung der Eigenschaften seiner speziellen Apparatur und ggf. in Ansehung von Detailunterschieden in der Wirkung vornehmen.

Bei einem zweiten Ansatz ist es hingegen die Voraussetzung, dass die Größe jeder Oberflächenzelle der Bearbeitungsoberfläche größer ist als die Strahlweite der Laserstrahlung. Bei diesem zweiten Ansatz ist nämlich vorgesehen, dass Oberflächenzellen der Bearbeitungsoberfläche, für die unterschiedliche Beaufschlagungsenergien bestimmt wurden, bei gleicher Fluenz in entsprechend unterschiedlichen Aspektenverhältnissen mit der Laserstrahlung beaufschlagt werden. Dieser Ansatz hat den Vorteil, dass keine ggf. schwierig zu realisierende, schnelle Intensitätsanpassung des Lasers erforderlich ist.

Es hat sich als gut praktikabel erwiesen, für die jeweilige Substratart eine (nicht-lineare) Kalibrierkurve der lokalen integrierten Schichtspannung als Funktion der Fluenz aufzunehmen. Mit dieser Kalibrierkurve können unmittelbar die für den oben erläuterten ersten Ansatz benötigten Lasereinstellungen bestimmt werden. Eine solche Kalibrierkurve ist bevorzugt auch Ausgangspunkt des zweiten Ansatzes, wobei die Abhängigkeit der integrierten Schichtspannung vom Aspektenverhältnis in sehr guter Näherung als linear angenommen werden kann.

Beim oben erläuterten zweiten Ansatz ist besonders bevorzugt vorgesehen, dass in jeder Oberflächenzelle der Bearbeitungsoberfläche eine gleiche Gesamtzahl potentieller Beaufschlagungspositionen definiert wird, wobei ein Einstellen eines vorgegebenen Aspektenverhältnisses durch Wahl der Anzahl tatsächlich mit der Laserstrahlung beaufschlagter Beaufschlagungspositionen im Verhältnis zur Gesamtzahl der potentiellen Beaufschlagungspositionen innerhalb der jeweiligen Oberflächenzelle erfolgt. Eine tatsächliche Beaufschlagung sämtlicher potentieller Beaufschlagungspositionen innerhalb einer Oberflächenzelle entspricht also der maximal in diese Oberflächenzelle einbringbaren Energie. In Zellen, in die eine geringere Beaufschlagungsenergie eingebracht werden soll, wird entsprechend nur ein geringerer Flächenanteil mit der Laserstrahlung beaufschlagt.

Die potentiellen Beaufschlagungspositionen sind bevorzugt in allen Oberflächenzellen der Bearbeitungsoberfläche gleich verteilt. Mit anderen Worten bilden die potentiellen Beaufschlagungspositionen in allen Oberflächenzellen das gleiche Muster. Auf diese Weise werden (geringe) Fehler vermieden, die durch evtl. musterabhängige Wirkungsunterschiede auftreten. Besonders bevorzugt ist dabei vorgesehen, dass die potentiellen Beaufschlagungspositionen innerhalb jeder von wenigstens einigen, insbesondere allen Oberflächenzellen der Bearbeitungsoberfläche gleichmäßig verteilt sind. Dies bedeutet mit anderen Worten, dass auch innerhalb der einzelnen Oberflächenzelle eine Gleichverteilung der potentiellen Beaufschlagungspositionen herrscht.

Alternativ ist es jedoch auch möglich, dass die potentiellen Beaufschlagungspositionen innerhalb jeder von wenigstens einigen, insbesondere allen Oberflächenzellen der Bearbeitungsoberfläche in Form eines Musters aus parallelen, geraden Linien verteilt sind. Bei dieser Ausführungsform der Erfindung werden also gezielt musterabhängige Detailunterschiede in der Wirkung der Laserbeaufschlagung ausgenutzt. Insbesondere hat sich gezeigt, dass eine Einbringung der Beaufschlagungsenergie in Form paralleler, gerader Linien innerhalb einer Oberflächenzelle zu einem (flächig) anisotropen Krümmungseffekt um eine quer zu besagten Linien ausgerichtete Krümmungsachse führt.

Das Laserstrahlprofil hat bevorzugt eine homogene Energieverteilung. Dies ist z.B. durch Abbildung eines aufgeweiteten Laserstrahls über eine Maske möglich. Die Berandung des Strahlprofils ist bevorzugt quadratisch, entsprechend den bevorzugt quadratisch geformten Oberflächenzellen der Bearbeitungsoberfläche. Allerdings kann auch eine komplexe Profilgestaltung gewählt werden, z. B. die oben erwähnte linienförmige Musterung. Auch hierbei bietet sich die Abbildung über eine entsprechend geformte Maske zur Erzeugung an.

Wie eingangs erläutert, führt der hier primär wirksame Temperaturgradientenmechanismus stets zu einer (bezogen auf die Bearbeitungsfläche) konkaven Krümmungsänderung. Bei einer Weiterbildung der Erfindung ist es jedoch auch möglich, komplexere Krümmungsänderungen vorzunehmen. Hierzu ist vorgesehen, dass die Bearbeitungsoberfläche vor Anwendung des erfindungsgemäßen Verfahrens bereits mit einer druckspannungserzeugenden Schicht beschichtet ist, die beim erfindungsgemäßen Beaufschlagen der Oberflächenzellen der Bearbeitungsoberfläche lokal ablatiert wird. Die druckspannungserzeugende Beschichtung, die nachfolgend auch verkürzt als Druckspannungsschicht angesprochen werden soll, bewirkt eine konvexe Vorspannung. Die erfindungsgemäße lokale Energiebeaufschlagung führt dann neben dem erläuterten, auf dem Temperaturgradientenmechanismus basierenden, konkaven Verformungseffekt zu einer lokalen Aufhebung der konvexen Vorkrümmung und damit zu einer Verstärkung der lokalen Konkav-Verformung. Durch geeignete Wahl der Beaufschlagungsmuster können auf diese Weise sehr komplexe Verformungen des Substrates erzielt werden.

Es hat sich gezeigt, dass erfindungsgemäß erzeugte Funktionsbauteile in seltenen Fällen mit der Zeit ihre Form geringfügig verändern. Dies kann zu Einbußen in der Funktionsgenauigkeit führen. Insbesondere wurde beobachtet, dass in besagten Fällen die erfindungsgemäß in das Substrat eingebrachten Spannungen mit der Zeit teilweise abgebaut werden. Um dem entgegenzuwirken, ist bei einer Weiterbildung der Erfindung vorgesehen, dass das nach dem Schritt des Beaufschlagens des Substrates mit der Beaufschlagungsenergie resultierende Funktionsbauteil für eine vorbestimmte Zeit einem vorbestimmten, gegenüber Raumtemperatur erhöhten und eine Erweichungstemperatur des Substrates und - soweit vorhanden - der Funktionsschicht nicht überschreitenden Temperaturverlauf ausgesetzt wird. Mit anderen Worten wird dem eigentlichen Herstellungsschritt ein Temper-Schritt nachgeschaltet, der einerseits das Substrat bzw. die Funktionsschicht nicht schädigen darf, andererseits aber dafür sorgt, dass der oben beschriebene Prozess des Spannungsabbaus deutlich beschleunigt wird. Die entsprechende Verformung kann bereits in kompensatorischer Weise bei der Berechnung der einzubringen Spannungen bzw. der aufzuwendenden Energiebeaufschlagung berücksichtigt werden. Der Temper-Schritt nimmt also quasi die Alterung des Funktionsbauteils vorweg und hinterlässt ein bei Raumtemperatur stabiles Funktionsbauteil, dessen Eigenschaften sich im Laufe der Zeit nicht mehr oder zumindest nur noch in deutlich geringerem Maße verändern.

Der Temper-Schritt kann unter einer von Raumatmosphärenbedingungen verschiedenen Atmosphäre erfolgen. Insbesondere kann er unter einer vorgegebenen Mischgasatmosphäre oder einem vorgegebenen (Misch-)Gasverlauf erfolgen. Hierdurch können zusätzliche, chemische Modifikationen ermöglicht oder unterbunden werden.

Ein solcher Temper-Schritt kann als ein klar vom eigentlichen Herstellungsverfahren separater Schritt durchgeführt werden. Dies insbesondere, wenn das eigentliche Herstellungsverfahren bei Raumtemperatur bzw. Raumatmosphärenbedingungen durchgeführt wird.

Alternativ ist es jedoch möglich, dass der Schritt des Beaufschlagens des Substrates mit der Beaufschlagungsenergie bei einer gegenüber Raumtemperatur erhöhten und eine Erweichungstemperatur des Substrates und - soweit vorhanden - der Funktionsschicht nicht überschreitenden Temperatur und/oder unter Raumatmosphärenbedingungen erfolgt. Dann wird die mit einer gegebenen Energiebeaufschlagung erzielbare Spannungseinbringung geringer ausfallen als bei Raumtemperatur, was bei der Berechnung der aufzuwendenden Energiebeaufschlagung berücksichtigt werden kann. Dafür wird die erzielte Verformung langfristig stabiler sein. Selbstverständlich ist dieser Ansatz auch mit einem separaten Temper-Schritt der zuvor erläuterten Art kombinierbar.

Der Fachmann wird verstehen, dass die im Einzelfall zu wählenden Temperatur- und Atmosphärenbedingungen stark von Material, Form und geplantem Einsatzgebiet des Funktionsbauteils abhängen und jeweils typspezifisch ermittelt werden müssen. Dies betrifft insbesondere auch die Bestimmung der nicht zu überschreitenden Erweichungstemperatur, die anhand von Schmelz- oder Glasübergangstemperaturen abgeschätzt werden kann.

Weitere Einzelheiten und Vorteile der Erfindung ergeben sich aus der nachfolgenden speziellen Beschreibung und den Zeichnungen.

Kurzbeschreibung der Zeichnungen

Es zeigen:

Figur 1: eine stark schematisierte Darstellung des erfindungsgemäßen Verfahrens,

Figur 2: eine Illustration unterschiedlicher Beaufschlagungen von Oberflächenzellen gemäß einer ersten Ausführungsform,

Figur 3: eine Illustration unterschiedlicher Beaufschlagungen von Oberflächenzellen gemäß einer zweiten Ausführungsform,

Figur 4: eine Illustration einer Ausführungsform mit linienförmig gemusterter Beaufschlagung einer Oberflächenzelle sowie

Figur 5: eine schematische Darstellung einer Weiterbildung des erfindungsgemäßen Verfahrens.

Beschreibung bevorzugter Ausführungsformen

Gleiche Bezugszeichen in den Figuren deuten auf gleiche oder analoge Elemente hin.

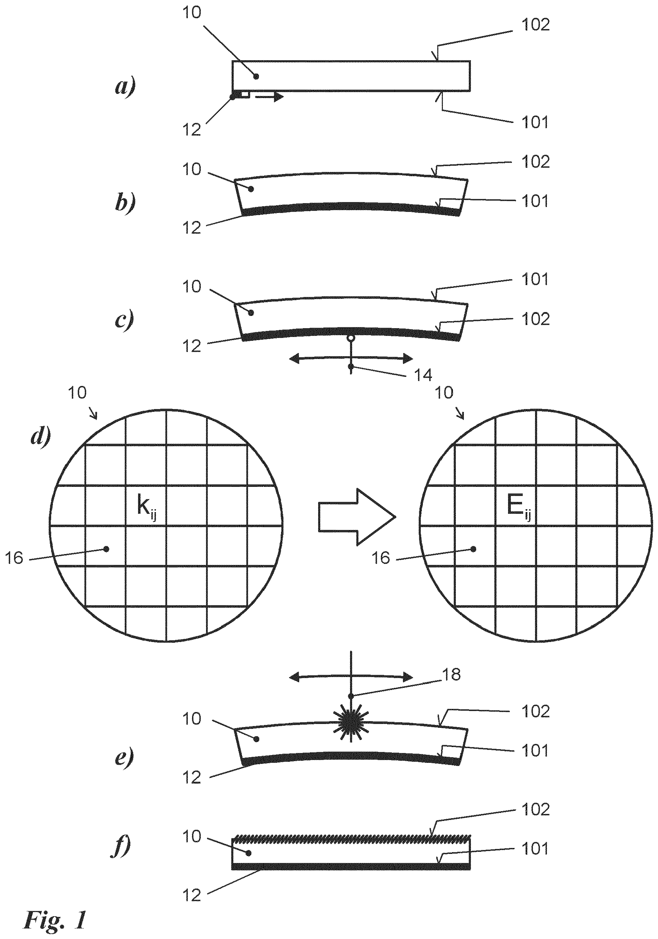

Figur 1 zeigt in sechs Verfahrensschritten eine stark schematisierte Darstellung des erfindungsgemäßen Umformverfahrens in einer günstigen Ausführungsform. In der Teilfigur a wird ein Substrat 10, welches eine Funktionsoberfläche 101 (Vorderseite; in den Figuren jeweils unten dargestellt) und eine Bearbeitungsoberfläche 102 (Rückseite; in den Figuren jeweils oben dargestellt) aufweist, mit einer Funktionsschicht 12 beschichtet. Bei der Funktionsschicht 12 kann es sich beispielsweise um eine Verspiegelung der Funktionsoberfläche 101 des Substrates 10 handeln. Ihre genaue Beschaffenheit ist im Kontext der vorliegenden Erfindung nicht relevant. Die Erfindung ist auch auf ein Substrat 10 ohne oder mit nachträglich aufgebrachter Funktionsschicht 12 anwendbar. In Figur 1 ist jedoch die aus praktischer Sicht besonders bevorzugte Ausführungsform der Erfindung dargestellt, bei der ein optisches Funktionsbauteil als solches einer erfindungsgemäßen, korrigierenden Umformung unterworfen wird.

Mit der Funktionsschicht 12 wird eine Zugspannungsschicht auf die Funktionsoberfläche 101 auf und damit in das Substrat eingebracht. Diese bewirkt, wie in Teilfigur b dargestellt, eine Verformung, insbesondere eine konkave Verkrümmung der Funktionsoberfläche 101 und eine entsprechend konvexe Verkrümmung der Bearbeitungsoberfläche 102. Eine solche Verformung ist in der Regel ungewollt und soll mittels des erfindungsgemäßen Verfahrens korrigiert werden.

Hierzu wird, wie in Teilfigur c dargestellt, zunächst die Form der Funktionsoberfläche 101 bzw. der auf dieser aufgebrachten Funktionsschicht 12 vermessen. Speziell wird die Krümmung der Funktionsoberfläche 101 / Funktionsschicht 12 über die gesamte Fläche gemessen. Dies kann, wie in Teilfigur c angedeutet, mittels eines taktilen Messstiftes 14 geschehen. Eine optische oder anderweitige Vermessung ist selbstverständlich jedoch auch möglich.

Wie in Teilfigur d dargestellt, wird im Anschluss das Substrat 10 in eine Mehrzahl von virtuellen Flächenzellen 16 unterteilt. Bei der dargestellten Ausführungsform sind die Flächenzellen 16 quadratisch und unmittelbar aneinander angrenzend in einem regelmäßigen Muster, welches nach Reihen i und Spalten j aufgeteilt ist, angeordnet. Jeder i/j-ten Flächenzelle 16 wird sodann ein Krümmungswert $k_{ij}$ zugeordnet, wobei der Krümmungswert $k_{ij}$ der i/j-ten Flächenzelle 16 der mittleren Krümmung entspricht, die im vorangegangenen Messschritt für die entsprechende Flächenzelle 16 der Funktionsoberfläche 101 / Funktionsschicht 12 bestimmt wurde. Es erfolgt sodann eine Umrechnung des Krümmungswertes $k_{ij}$ in einen Energiewert $E_{ij}$. Dabei wird der Ist-Wert $k_{ij}$ der Krümmung zunächst mit einem Soll-Wert verglichen, d.h. mit derjenigen Krümmung, die das umgeformte Substrat 10 am Verfahrensende im Bereich der betreffenden Flächenzelle 16 haben sollte, beispielsweise Null. Hieraus ergibt sich eine Krümmungsdifferenz $\Delta k_{ij}$, die mit einer nachfolgenden Strahlungsbeaufschlagung des Substrates in der entsprechenden Flächenzelle 16 erzielt werden soll. Diese angestrebte Krümmungsänderung $\Delta k_{ij}$ wird sodann, wie im allgemeinen Teil der Beschreibung ausführlich erläutert, in den Energiewert $E_{ij}$ umgerechnet.

Im nachfolgenden, in Teilfigur e dargestellten Verfahrensschritt wird alsdann die Bearbeitungsoberfläche 102 des Substrates 10 mit einem gepulsten Laserstrahl 18 abgerastert, wobei jede Flächenzelle 16 mit der ihr zugeordneten Beaufschlagungsenergie $E_{ij}$ beaufschlagt wird.

Es resultiert, wie in Teilfigur f dargestellt, ein Substrat 10 mit einer durch die Laserbestrahlung modifizierten Bearbeitungsoberfläche 102, wobei insbesondere eine aufgeschmolzene und rückerstarrte Spannungsschicht 20 entsteht, die eine der von der Funktionsschicht 12 erzeugten Zugspannung entgegenwirkende Zugspannung auf das Substrat 10 ausübt. Dieser Zugspannung folgend verformt sich das Substrat 10, sodass bei der dargestellten Ausführungsform die durch die Funktionsschicht 12 eingebrachte Verkrümmung exakt kompensiert wird.

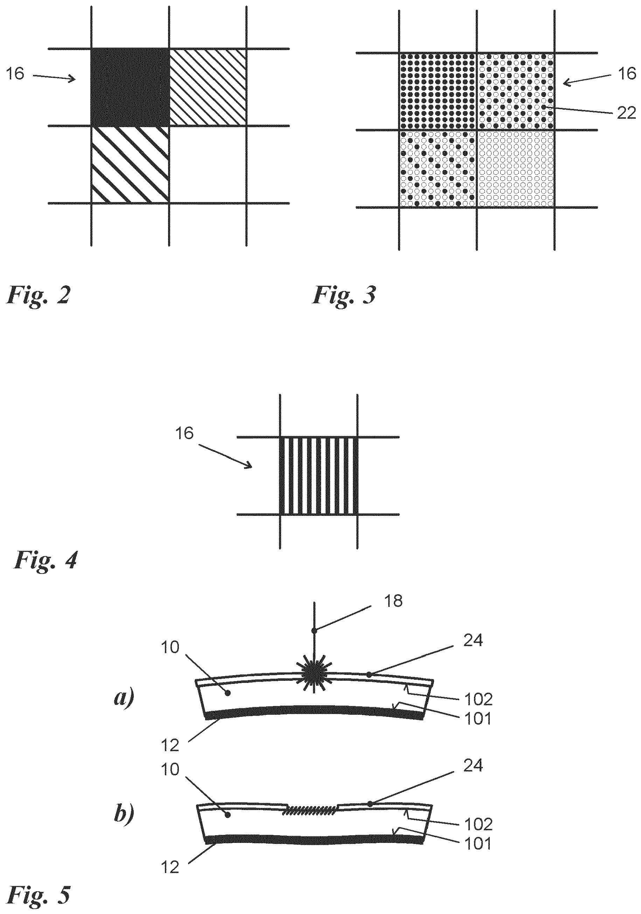

Unterschiedlichen Flächenzellen 16 kann je nach der benötigten lokalen Verkrümmung eine unterschiedliche Beaufschlagungsenergie $E_{ij}$ zugewiesen (und die entsprechende Flächenzelle 16 mit dieser zugewiesenen Beaufschlagungsenergie beaufschlagt) werden. Zwei Varianten, solche unterschiedlichen Beaufschlagungsenergien zu realisieren, sind in den Figuren 2 und 3 illustriert. Bei der Ausführungsform von Figur 2 wird jede Flächenzelle 16 mit einem ihrer Größe entsprechenden Laser-Spot bestrahlt, wobei unterschiedliche Flächenzellen 16 mit unterschiedlichen Fluenzen (illustriert durch unterschiedlichen dichte Schraffur) beaufschlagt werden. Mit anderen Worten wird während des Scan-Vorgangs die Intensität des Laserstrahls 18 variiert.

Bei der Ausführungsform von Figur 3 wird ein Laser-Spot verwendet, der deutlich kleiner ist als die Flächenzelle 16. Speziell ist er so groß gewählt, wie eine von einer festgelegten Anzahl potentieller Beaufschlagungspositionen 22 pro Flächenzelle 16. Um unterschiedliche Flächenzellen 16 mit unterschiedlichen Laserenergien $E_{ij}$ zu beaufschlagen, wird bei dieser Ausführungsform nicht die Intensität des Laserstrahls 18 variiert. Vielmehr wird das Aspektenverhältnis, d. h. das Verhältnis tatsächlich beaufschlagter Beaufschlagungspositionen 22 (schwarze Felder) zur Gesamtzahl der potentiellen Beaufschlagungspositionen 22 (schwarze und weiße Felder) variiert.

Bei der Ausführungsform von Figur 4 wird jede Flächenzelle 16 mit einem Gitterlinien-Muster beaufschlagt, wodurch eine stärkere Krümmung um eine Krümmungsachse senkrecht zur Linienausrichtung als um eine Krümmungsachse parallel zur Linienausrichtung erzeugt werden kann.

Die unterschiedlichen Formen und Größen des Laser-Spots können beispielsweise durch Abbildung einer entsprechend beleuchteten Maske auf das Substrat 10, insbesondere dessen Bearbeitungsoberfläche 102, erzeugt werden.

Figur 5 zeigt eine Weiterbildung des erfindungsgemäßen Verfahrens. Hierbei ist auf der Bearbeitungsfläche 102 eine zusätzliche, Druckspannungsschicht 24 aufgetragen. Diese kann beispielsweise als ein $SiO_2$-Film ausgebildet sein. Diese Druckspannungsschicht 24 erzeugt eine konvexe Verkrümmung der Bearbeitungsoberfläche 102, verstärkt also die verkrümmende Wirkung der Funktionsschicht 12 (sofern vorhanden). Im Rahmen der Laser-Beaufschlagung, die im Übrigen wie oben erläutert erfolgt, wird zusätzlich zur Modifikation der Bearbeitungsoberfläche 102 die Druckspannungsschicht 24 ablatiert. Dadurch verliert sie lokal ihre Druckspannungswirkung. Hinzu kommt die durch die Lasermodifikation der Bearbeitungsoberfläche 102 erzeugte, lokale Zugspannungswirkung, sodass sich insgesamt eine komplexe Verformung des Substrates 10 einstellt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere wird der Fachmann die Wahl seines Lasers und dessen Strahlungsparameter in Abhängigkeit von den insbesondere durch das Material des Substrates gegebenen Erfordernissen einzustellen wissen. Dabei wird er die erfindungsgemäßen Vorgaben zur thermischen Eindringtiefe der verwendeten Laserstrahlung berücksichtigen können. Mit solcher Anpassung ist das erfindungsgemäße Verfahren auf eine Vielzahl von Materialien anwendbar. Insbesondere können die zum Bau von optischen Funktionselementen besonders häufig und vorteilhaft verwendeten Materialien wie Glas, Quarz, Keramik und Silizium erfindungsgemäß verformt werden. Die bevorzugte Größe der Substrate liegt bei Längsdimensionen von unter 30cm und Dickendimensionen von unter 5cm. Auch bei größeren Substraten ist eine erfindungsgemäße Bearbeitung grundsätzlich möglich; der technisch nutzbare Effekt wird jedoch bei zu großen Dimensionen zu gering ausfallen, sodass eine solche Bearbeitung rein theoretischer Natur ohne praktischen Wert ist. Rein beispielhaft sei die Verwendung des Strahls eines ArF-Excimerlasers mit einer Wellenlänge von 193 nm, einer Pulslänge von 20 ns, einer (bedarfsweise variierten) Fluenz von 0 bis 2000 mJ/cm² und einer quadratischen Form von 50 bis 300 μm Kantenlängen als für die Bearbeitung von quadratischen Borosilikat-Plättchen einer Kantenlänge von 22 mm und einer Dicke von 210 μm geeignet genannt, wobei die Bearbeitung durch Bestrahlung mit jeweils einem Puls pro Beaufschlagungsposition erfolgt.

Bezugszeichenliste

| 10  | Substrat                       |
|-----|--------------------------------|
| 101 | Funktionsoberfläche von 10     |
| 102 | Bearbeitungsoberfläche von 10  |
| 12  | Funktionsschicht               |
| 14  | Messstift                      |
| 16  | Flächenzelle                   |
| 18  | Laserstrahl                    |
| 20  | Zugspannungsschicht            |
| 22  | (potentielle) Beaufschlagungsposition |
| 24  | Druckspannungsschicht          |

**Patentansprüche**

1. Verfahren zur umformenden Bearbeitung eines als Trägersubstrat für ein optisches Funktionsbauteil geeigneten, plattenartigen Substrates (10), im Rahmen dessen eine Bearbeitungsoberfläche (102) des Substrates (10) durch lokale Lasermodifikation mit Zugspannungsbereichen (20) versehen wird, um so eine Verformung des Substrates (10) hervorzurufen, wobei die Lasermodifikation durch Beaufschlagung der Bearbeitungsoberfläche (102) mit gepulster Laserstrahlung (18) einer thermischen Eindringtiefe zwischen 10 nm und 10 μm erfolgt, **gekennzeichnet durch** die Schritte:

- Ermitteln der Ist-Krümmung der der Bearbeitungsoberfläche (102) gegenüberliegenden Funktionsoberfläche (101) des Substrates (10),

- Berechnen der Krümmungsdifferenz zwischen der ermittelten Ist-Krümmung und einer vorgegebenen Soll-Krümmung der Funktionsoberfläche (101),
- virtuelles, flächendeckendes Unterteilen der Bearbeitungsoberfläche (102) und der Funktionsoberfläche (101) in eine Mehrzahl korrespondierender Oberflächenzellen und Zuordnen eines Krümmungsdifferenzwertes zu jeder Oberflächenzelle der Bearbeitungsoberfläche (102), wobei der Krümmungsdifferenzwert jeweils dem Wert der mittleren Krümmungsdifferenz in der korrespondierenden Oberflächenzelle der Funktionsoberfläche (101) entspricht,
- für jede Oberflächenzelle der Bearbeitungsoberfläche (102):

  ▪ Bestimmen derjenigen Laserenergie als Beaufschlagungsenergie ($E_{ij}$), deren Eintrag in die Oberflächenzelle zur Erzielung einer dem zugeordneten Krümmungsdifferenzwert entsprechenden Verformung geeignet ist, und
  ▪ Beaufschlagen der Oberflächenzelle mit dieser Beaufschlagungsenergie ($E_{ij}$).

2. Verfahren nach Anspruch 1, **dadurch gekennzeichnet,** **dass** Oberflächenzellen der Bearbeitungsoberfläche (102), für die unterschiedliche Beaufschlagungsenergien ($E_{ij}$) bestimmt wurden, bei gleichem Aspektenverhältnis mit der Laserstrahlung (18) entsprechend unterschiedlicher Fluenzen beaufschlagt werden.

3. Verfahren nach einem der vorangehenden Ansprüche, **dadurch gekennzeichnet, dass** die Größe jeder Oberflächenzelle der Bearbeitungsoberfläche (102) kleiner ist als die Strahlweite der Laserstrahlung (18).

4. Verfahren nach einem der Ansprüche 1 bis 2, **dadurch gekennzeichnet, dass** die Größe jeder Oberflächenzelle der Bearbeitungsoberfläche (102) größer ist als die Strahlweite der Laserstrahlung (18).

5. Verfahren nach Anspruch 4, **dadurch gekennzeichnet,** **dass** Oberflächenzellen der Bearbeitungsoberfläche (102), für die unterschiedliche Beaufschlagungsenergien ($E_{ij}$) bestimmt wurden, bei gleicher Fluenz in entsprechend unterschiedlichen Aspektenverhältnissen mit der Laserstrahlung (18) beaufschlagt werden.

6. Verfahren nach Anspruch 5,

**dadurch gekennzeichnet,**
**dass** in jeder Oberflächenzelle der Bearbeitungsoberfläche (102) eine gleiche Gesamtzahl potentieller Beaufschlagungspositionen (22) definiert wird, wobei ein Einstellen eines vorgegebenen Aspektenverhältnisses durch Wahl der Anzahl tatsächlich mit der Laserstrahlung beaufschlagter Beaufschlagungspositionen (22) im Verhältnis zur Gesamtzahl der potentiellen Beaufschlagungspositionen (22) innerhalb der jeweiligen Oberflächenzelle erfolgt.

7. Verfahren nach Anspruch 6,
**dadurch gekennzeichnet,**
**dass** die potentiellen Beaufschlagungspositionen (22) in allen Oberflächenzellen der Bearbeitungsoberfläche (102) gleich verteilt sind.

8. Verfahren nach Anspruch 7.
**dadurch gekennzeichnet,**
**dass** die potentiellen Beaufschlagungspositionen (22) innerhalb jeder von wenigstens einigen Oberflächenzellen der Bearbeitungsoberfläche (102) gleichmäßig verteilt sind.

9. Verfahren nach einem der vorangehenden Ansprüche,
**dadurch gekennzeichnet,**
**dass** die potentiellen Beaufschlagungspositionen (22) innerhalb jeder von wenigstens einigen Oberflächenzellen der Bearbeitungsoberfläche (102) in Form eines Musters aus parallelen, geraden Linien verteilt sind.

10. Verfahren nach einem der vorangehenden Ansprüche,
**dadurch gekennzeichnet,**
**dass** die Bearbeitungsoberfläche (102) mit einer druckspannungserzeugenden Schicht (24) beschichtet ist, die beim Beaufschlagen der Oberflächenzellen der Bearbeitungsoberfläche (102) lokal ablatiert wird.

11. Verfahren nach einem der vorangehenden Ansprüche,
**dadurch gekennzeichnet,**
**dass** das Substrat (10) auf seiner der Bearbeitungsoberfläche (102) gegenüber liegenden Funktionsoberfläche (101) mit einer optischen Funktionsschicht (12) beschichtet ist.

12. Verfahren nach einem der vorangehenden Ansprüche,
**dadurch gekennzeichnet,**
**dass** das nach dem Schritt des Beaufschlagens des Substrates (10) mit der Beaufschlagungsenergie resultierende Funktionsbauteil für eine vorbestimmte Zeit einem vorbestimmten, gegenüber Raumtemperatur erhöhten und eine Erweichungstemperatur des Substrates und - soweit vorhanden - der Funktionsschicht (12) nicht überschreitenden Temperaturverlauf ausgesetzt wird.

13. Verfahren nach Anspruch 12,
**dadurch gekennzeichnet,**
**dass** das Substrat (10) unter einer von Raumatmosphärenbedingungen verschiedenen Atmosphäre dem vorbestimmten Temperaturverlauf ausgesetzt wird.

14. Verfahren nach einem der vorangehenden Ansprüche,
**dadurch gekennzeichnet,**
**dass** der Schritt des Beaufschlagens des Substrates (10) mit der Beaufschlagungsenergie bei Raumtemperatur und/oder Raumatmosphärenbedingungen erfolgt.

15. Verfahren nach einem der Ansprüche 1 bis 13,
**dadurch gekennzeichnet,**
**dass** der Schritt des Beaufschlagens des Substrates (10) mit der Beaufschlagungsenergie bei einer gegenüber Raumtemperatur erhöhten und eine Erweichungstemperatur des Substrates (10) und - soweit vorhanden - der Funktionsschicht (12) nicht überschreitenden Temperatur und/oder unter Raumatmosphärenbedingungen erfolgt.

**Claims**

1. Method for the forming processing of a plate-like substrate (10) suitable as a carrier substrate for an optical functional component, in the context of which a processing surface (102) of the substrate (10) is, by local laser modification, provided with tensile stress regions (20) in order to cause a deformation of the substrate (10), the laser modification being effected by exposure of the processing surface (102) to pulsed laser radiation (18) having a thermal penetration depth of between 10 nm and 10 $\mu$m,
**characterized by**
the steps of:

- determining the actual curvature of the functional surface (101) of the substrate (10) opposite the processing surface (102),
- calculating the curvature difference between the determined actual curvature and a specified target curvature of the functional surface (101),
- virtually dividing the processing surface (102) and the functional surface (101) into a plurality of corresponding surface cells and assigning a curvature difference value to each surface cell of the processing surface (102), the curvature difference value corresponding in each case to the value of the mean curvature difference in the corresponding surface cell of the functional surface (101),
- for each surface cell of the processing surface (102):

■ Determining the laser energy as irradiation energy ($E_{ij}$) whose input into the surface cell is suitable for achieving a deformation corresponding to the assigned curvature difference value, and
■ Irradiating the surface cell with this irradiation energy ($E_{ij}$).

2. Method according to claim 1,
   **characterized**
   **in that** surface cells of the processing surface (102), for which different irradiation energies ($E_{ij}$) have been determined, are irradiated with laser radiation (18) of correspondingly different fluences at the same aspect ratio.

3. Method according to one of the preceding claims,
   **characterized**
   **in that** the size of each surface cell of the processing surface (102) is smaller than the beam width of the laser radiation (18).

4. The method according to any one of claims 1 to 2,
   **characterized**
   **in that** the size of each surface cell of the processing surface (102) is larger than the beam width of the laser radiation (18).

5. Method according to claim 4,
   **characterized**
   **in that** surface cells of the processing surface (102), for which different irradiation energies ($E_{ij}$) have been determined, are irradiated with laser radiation (18) of the same fluence at correspondingly different aspect ratios.

6. Method according to claim 5,
   **characterized**
   **in that** the same total number of potential irradiation positions (22) is defined in each surface cell of the processing surface (102), a predetermined aspect ratio being set by selecting the number of irradiation positions (22) actually exposed to the laser radiation in relation to the total number of potential irradiation positions (22) within the respective surface cell.

7. Method according to claim 6,
   **characterized**
   **in that** the potential irradiation positions (22) are distributed the same way in all surface cells of the processing surface (102).

8. The method according to claim 7,

**characterized**
**in that** the potential irradiation positions (22) are evenly distributed within each of at least some surface cells of the processing surface (102).

9. A method according to any one of the preceding claims,
   **characterized**
   **in that** the potential irradiation positions (22) are distributed within each of at least some surface cells of the processing surface (102) in the form of a pattern of parallel, straight lines.

10. Method according to one of the preceding claims,
    **characterized**
    **in that** the processing surface (102) is coated with a compressive stress-generating layer (24) which is locally ablated when the surface cells of the processing surface (102) are irradiated.

11. Method according to one of the preceding claims,
    **characterized**
    **in that** the substrate (10) is coated with an optical functional layer (12) on its functional surface (101) opposite the processing surface (102).

12. Method according to one of the preceding claims,
    **characterized**
    **in that** the functional component resulting after the step of applying the irradiation energy to the substrate (10) is exposed for a predetermined time to a predetermined temperature profile which is higher than room temperature and does not exceed a softening temperature of the substrate and - if present - of the functional layer (12).

13. Method according to claim 12,
    **characterized**
    **in that** the substrate (10) is exposed to the predetermined temperature profile under an atmosphere different from room atmosphere conditions.

14. Method according to one of the preceding claims,
    **characterized**
    **in that** the step of irradiating the substrate (10) with the irradiation energy takes place at room temperature and/or room atmosphere conditions.

15. Method according to any one of claims 1 to 13,
    **characterized**
    **in that** the step of irradiating the substrate (10) with the irradiation energy takes place at a temperature which is elevated with respect to room temperature and does not exceed a softening temperature of the substrate (10) and - if present - of the functional layer (12) and/or under room atmosphere conditions.

**Revendications**

1. Procédé d'usinage par déformation d'un substrat (10) en forme de plaque, convenant comme substrat de support pour un composant fonctionnel optique, dans le cadre duquel une surface de traitement (102) du substrat (10) est pourvue de zones de contrainte de traction (20) par modification locale au laser, afin de provoquer ainsi une déformation du substrat (10), la modification au laser s'effectuant par exposition de la surface de traitement (102) à un rayonnement laser pulsé (18) ayant une profondeur de pénétration thermique comprise entre 10 nm et 10 μm,
**caractérisé par**
les étapes :

   - déterminer la courbure réelle de la surface fonctionnelle (101) du substrat (10) opposée à la surface de traitement (102),
   - calculer la différence de courbure entre la courbure réelle déterminée et une courbure de consigne prédéterminée de la surface fonctionnelle (101),
   - division virtuelle complet de la surface de traitement (102) et de la surface fonctionnelle (101) en une pluralité de cellules de surface correspondantes et attribution d'une valeur de différence de courbure à chaque cellule de surface de la surface de traitement (102), la valeur de différence de courbure correspondant respectivement à la valeur de la différence de courbure moyenne dans la cellule de surface correspondante de la surface fonctionnelle (101),
   - pour chaque cellule de surface de la surface de traitement (102):

      ▪ déterminer comme énergie d'irradiation ($E_{ij}$) l'énergie laser dont l'apport dans la cellule de surface est approprié pour obtenir une déformation correspondant à la valeur de différence de courbure associée, et
      ▪ irradier la cellule de surface avec cette énergie d'irradiation ($E_{ij}$).

2. Procédé selon la revendication 1, caractérisé en ce ces cellules de surface de la surface de traitement (102), pour lesquelles différentes énergies d'irradiation ($E_{ij}$) ont été déterminées, sont exposées au rayonnement laser (18) avec le même rapport d'aspect, selon des fluences différentes correspondantes.

3. Procédé selon l'une des revendications précédentes,
**caractérisé**
**en ce que** la taille de chaque cellule de surface de la surface de traitement (102) est inférieure au diamètre du faisceau du rayonnement laser (18).

4. Procédé selon l'une quelconque des revendications 1 à 2,
**caractérisé**
**en ce que** la taille de chaque cellule de surface de la surface de traitement (102) est supérieure au diamètre de faisceau du rayonnement laser (18).

5. Procédé selon la revendication 4, caractérisé en que ces cellules de surface de la surface de traitement (102), pour lesquelles différentes énergies d'irradiation ($E_{ij}$) ont été déterminées, sont exposées au rayonnement laser (18) avec la même fluence, selon des rapports d'aspect différents correspondants.

6. Procédé selon la revendication 5,
**caractérisé**
**en ce qu'**un même nombre total de positions d'irradiation potentielles (22) est défini dans chaque cellule de surface de la surface de traitement (102), un réglage d'un rapport d'aspect prédéterminé étant effectué en choisissant le nombre de positions d'irradiation (22) effectivement exposées au rayonnement laser par rapport au nombre total de positions d'irradiation potentielles (22) à l'intérieur de la cellule de surface respective.

7. Procédé selon la revendication 6,
**caractérisé**
**en ce que** les positions d'irradiation potentielles (22) sont réparties de manière identique dans toutes les cellules de surface de la surface de traitement (102).

8. Procédé selon la revendication 7,
**caractérisé**
**en ce que** les positions d'irradiation potentielles (22) sont réparties uniformément à l'intérieur de chacune d'au moins quelques cellules de surface de la surface de traitement (102).

9. Procédé selon l'une quelconque des revendications précédentes,
**caractérisé**
**en ce que** les positions d'irradiation potentielles (22) sont réparties à l'intérieur de chacune d'au moins quelques cellules de surface de la surface de traitement (102) sous la forme d'un motif de lignes droites parallèles.

10. Procédé selon l'une des revendications précédentes,
**caractérisé**
**en ce que** la surface de traitement (102) est revêtue d'une couche génératrice de contraintes de compression (24) qui est abaissée localement lorsque les cellules de surface de la surface de traitement (102) sont irradiées.

11. Procédé selon l'une des revendications précédentes,
**caractérisé**
**en ce que** le substrat (10) est revêtu d'une couche fonctionnelle optique (12) sur sa surface fonctionnelle (101) opposée à la surface de traitement (102).

12. procédé selon l'une des revendications précédentes,
**caractérisé**
**en ce que** le composant fonctionnel résultant de l'étape d'irradiation du substrat (10) avec l'énergie d'irradiation est exposé pendant un temps prédéterminé à une courbe de température prédéterminée, augmentée par rapport à la température ambiante et ne dépassant pas une température de ramollissement du substrat et - si présente - de la couche fonctionnelle (12).

13. Procédé selon la revendication 12,
**caractérisé**
**en ce que** le substrat (10) est exposé à la courbe de température prédéterminée dans une atmosphère différente des conditions de l'atmosphère ambiante.

14. Procédé selon l'une quelconque des revendications précédentes,
**caractérisé**
**en ce que** l'étape d'irradiation du substrat (10) avec l'énergie d'irradiation est réalisée à température ambiante et/ou dans des conditions d'atmosphère ambiante.

15. Procédé selon l'une quelconque des revendications 1 à 13,
**caractérisé**
**en ce que** l'étape d'irradiation du substrat (10) avec l'énergie d'irradiation est réalisée à une température élevée par rapport à la température ambiante et ne dépassant pas une température de ramollissement du substrat (10) et - si présente - de la couche fonctionnelle (12) et/ou dans des conditions d'atmosphère ambiante.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10044212 A1
- US 20180067403 A1
- US 20130161797 A1
- WO 2005005069 A2
- US 20140083984 A1
- CN 104360429 A

**In der Beschreibung aufgeführte Nicht-Patentliteratur**

- **ZHANG, X. R. ; XU, XIANFAN.** Microscale bending of brittle materials using pulsed and CW lasers. *Proc. SPIE 4637, Photon Processing in Microelectronics and Photonics,* 18. Juni 2002

- **HENG E. ZUO et al.** Demonstration of femtosecond laser micromachining for figure correction of thin silicon optics for x-ray telescopes. *Proc. SPIE 11119, Optics for EUv, X-Ray, and Gamma-Ray Astronomy IX,* 09. September 2019, 111191A, https://doi.org/10.1117/12.2530947